# EUROPEAN PATENT SPECIFICATION

(11) **EP 2 541 978 B1**
(45) Date of publication and mention of the grant of the patent: **12.03.2014**
(21) Application number: 12004702.2
(22) Date of filing: 22.06.2012
(51) Int. Cl.: H04W 12/06

(54) **NFC enabled devices to store and retrieve portable application-specific personal information for use with computational platforms**
NFC-aktivierte Vorrichtungen zum Speichern und zum Zugreifen auf tragbare anwendungsspezifische persönliche Informationen zur Verwendung mit Computerplattformen
Dispositifs compatibles NFC pour stocker et extraire des informations personnelles spécifiques à une application portable destinés à être utilisés avec des plates-formes de calcul

(30) Priority: 27.06.2011 US 201113169595
(43) Date of publication of application: 02.01.2013
(73) Proprietor: Broadcom Corporation, Irvine, CA 92617 (US)
(72) Inventor: Royston, Philip Stewart, Speen, Newbury Berks RG14 1RQ (GB); Cox, David Grant, Newbury Berkshire RG14 6JG (GB)
(74) Representative: Jehle, Volker Armin

(56) References cited:
- WO-A2-2007/008540
- US-A1- 2004 128 389
- US-A1- 2009 287 928
- US-A1- 2009 298 426

## Description

### Field of the Invention

The present invention relates generally to Near Field Communication (NFC) devices and the operation and application thereof. More particularly, the present invention relates to methods and apparatus for using NFC communication devices to store and retrieve portable application-specific personal information for use with computational platforms.

### Background

Advances in semiconductor manufacturing technologies have resulted in dramatically increased circuit packing densities and higher speeds of operation. In turn, these advances have provided designers with the ability to produce many processor and communication functions that were not previously practical. In some instances these functions are combined in a single highly integrated device. In other instances these functions are partitioned into two or more devices or chips.

Advances in digital systems architecture, in combination with the advances in the speed and density of semiconductors, have resulted in the availability of substantial computing power and digital communications networks for relatively low cost. In turn, this has led to a vast installed base of computers and other computational platforms each with the ability to communicate with others.

Given the very large installed base of computational platforms, which includes at least personal computers and smartphones, it is not surprising that software has been developed for a variety of applications in which two or more computational platforms communicate with and amongst each other. Such applications are typically Internet-based applications. Some of the most common of these applications include on-line shopping, on-line banking, and other on-line activities such as social networking.

On-line applications such as the above-mentioned on-line shopping, on-line banking, and social networking often require a user to remember information associated with each of these applications. For example, web site addresses, user names, passwords and/or other credentials must be remembered in order to access each of these categories of on-line applications. In some cases, users store this information on their personal computers. However, storing sensitive information on the same computer that connects to the Internet may create a situation where the security of credentials and related sensitive information is put at risk, and the information may be acquired or otherwise compromised by unauthorized entities through the action of malicious hardware and/or software.

A further disadvantage of storing users' credentials and related sensitive information on the users' respective personal computers is that the users are not able to conveniently gain access to the variety of on-line applications on computers or other computational platforms where such credentials/information is not stored. As the installed base of computational platforms and Internet-based applications grows, the desire of users to access on-line applications from computational platforms other than their own personal computers also increases. Further relevant prior art is document US 2004 128 389.

What is needed are methods, apparatuses and systems for facilitating securely providing one or more sets of credentials or other personal information to one or more computational platforms.

### BRIEF SUMMARY OF THE INVENTION

The invention is defined by independent claims 1, 8 and 9.

According to an aspect, a method of providing, over a near-field communications link, portable application-specific personal information to a web-based application, comprises:
storing a list of at least one web-based application;
storing at least one set of credentials in a corresponding at least one memory region within an NFC-enabled device, each set of credentials associated with a corresponding web-based application from the list of web-based applications;
disposing the NFC-enabled device within a near-field operational range of a computational platform;
near-field communicating the list of web-based applications to the computational platform; and
near-field communicating the plurality of sets of credentials to the computational platform.

Advantageously, the method further comprises:
near-field communicating a command to the computational platform.

Advantageously, the command is near-field communicated prior to near-field communicating the at least one set of credentials; and wherein the command is selected from the group consisting of reset the computational platform, restart the computational platform, perform a virus scan, and perform a malware scan.

Advantageously, the method further comprises:
storing one or more sets of cookies, each set of cookies associated with a corresponding web-based application from the list of web-based applications.

Advantageously, the method further comprises:
near-field communicating the one or more sets of cookies from the NFC-enabled device to the computational platform.

Advantageously, the method further comprises:
receiving, at the NFC-enabled device via near-field coupling, one or more sets of cookies; and
storing the one or more sets of cookies in a memory of the NFC-enabled device.

Advantageously, at least one web-based application is a social networking application.

Advantageously, at least one web-based application is selected from the group consisting of online shopping and on-line banking.

According to an aspect, a method of securely providing sensitive information, over a near-field communications link, to one or more web-based applications, comprises:
near-field coupling an NFC-enabled device to a computational platform having NFC reader capability;
near-field communicating a series of two or more commands to the computational platform; and
near-field communicating, subsequent to completion of the two or more commands by the computational platform, a list of web-based applications, one or more sets of user account credentials, and one or more sets of cookies.

According to an aspect, a method of operating an NFC-enabled computational platform comprises:
interrogating an NFC-enabled device that is disposed within a near-field coupling distance of the computational platform;
receiving, at the computational platform via near-field coupling, at least one command from the NFC-enabled device;
performing one or more actions required by the command;
receiving, at the computational platform via near-field coupling, information identifying at least one web-based application;
receiving, at the computational platform via near-field coupling, at least one set of credentials, each set of credentials associated with a corresponding one of the at least one web-based applications.

Advantageously, the method further comprises:
receiving, at the computational platform via near-field coupling, at least one set of cookies.

Advantageously, the method further comprises:
performing a website authentication operation.

Advantageously, the method further comprises:
detecting, at the computational platform, the presence of an NFC-enabled device within near-field coupling range; and
waking from a power saving state.

Advantageously, the method further comprises:
detecting the presence of malicious software on the computational platform.

Advantageously, the method further comprises:
reporting the detection of malicious software to the NFC-enabled device.

According to an aspect, an NFC-enabled device comprises:
a first memory, the first memory having stored therein a list of web-based applications;
a second memory, the second memory having stored therein at least one set of user account credentials;
a third memory, the third memory having stored therein at least one set of cookies;
a fourth memory, the fourth memory having stored therein program code;
a memory access controller coupled to the first memory, the second memory, the third memory, and the fourth memory;
a computational resource coupled to the memory access controller; and
an NFC modem coupled to the computational resource.

Advantageously, the NFC communication device further comprises:
an energy harvesting circuit coupled to the NFC modem.

Advantageously, the list of web-based applications includes social networking applications.

Advantageously, the NFC-enabled device is a smart phone.

Advantageously, the first, second, third and fourth memories are coupled to the memory controller by a bus; the first, second, third and fourth memories are non-volatile memories; and at least the first, second and third memories are writable.

### BRIEF DESCRIPTION OF THE DRAWINGS

Embodiments of the invention are described with reference to the accompanying drawings. In the drawings, like reference numbers indicate identical or functionally similar elements. Additionally, the left most digit(s) of a reference number identifies the drawing in which the reference number first appears.
Fig. 1 is a block diagram illustrating a near field communication (NFC) environment in accordance with the present invention.
Fig. 2 is a high-level block diagram illustrating an NFC-enabled device in accordance with the present invention.
Fig. 3 is a high-level block diagram illustrating an NFC-enabled device similar to that shown in Fig. 2 but further including energy harvesting circuitry.
Fig. 4 is a flow diagram of a method of providing, over a near-field communications link, portable application-specific personal information to a web-based application.
Fig. 5 is a flow diagram of a method of securely providing sensitive information, over a near-field communications link, to one or more web-based applications.
Fig. 6 is a flow diagram of a method of operating an NFC-enabled computational platform.

The invention will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION

The following Detailed Description refers to accompanying drawings to illustrate exemplary embodiments consistent with the invention. References in the Detailed Description to "one exemplary embodiment," "an illustrative embodiment", "an exemplary embodiment," and so on., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the scope of the present claims. Therefore, the Detailed Description is not meant to limit the invention. Rather, the scope of the invention is defined only in accordance with the following claims and their equivalents.

The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the scope of the present claims. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although the description of the present invention is to be described in terms of Near Field Communication (NFC), those skilled in the relevant art(s) will recognize that the present invention may be applicable to other communication platforms that use the near field and/or the far field without departing from the scope of the present claims. For example, although the present invention is to be described using NFC capable communication devices, those skilled in the relevant art(s) will recognize that functions of these NFC capable communication devices may be applicable to other communications devices that use the near field and/or the far field without departing from the scope of the present claims.

### Terminology

Browser refers to a program which allows a user to read files and information embedded in hypertext links in these files. The browser gives some means of viewing the contents of local and remote files and of navigating from one file to another using embedded hypertext links. Browsers act as clients to remote web servers. Browsers are also referred to as web browsers.

Hypertext refers to a collection of documents containing cross-references or "links" which, with the aid of an interactive browser program, allow the reader to move easily from one document to another.

Hyperlink refers to a reference (link) from some point in one hypertext document to (some point in) another document or another place in the same document. A browser usually displays a hyperlink in some distinguishing way, e.g., in a different color, font or style. When a user activates the link (e.g., by clicking on it with the mouse) the browser will display the target of the link.

Operating system refers generally to the software that schedules tasks, allocates storage, handles the interface to peripheral hardware and presents a default interface to the user when no application program is running.

Plug-in refers to a file containing data used to alter, enhance, or extend the operation of a parent application program.

Web server refers to a server process running at a web site which sends out web pages in response to HTTP requests from remote browsers.

Web site refers to any computer on the Internet running a World Wide Web server process. A particular web site is identified by the hostname part of a URL.

The term "cookie" refers to a file placed into the file storage system of a computational platform, typically by a web browser.

As used herein, the term "transceiver" refers to circuitry including a transmitter and a receiver such that a transceiver may be used to both transmit and receive information. In various implementations of the present invention, a transceiver may be operable in a half-duplex mode, a full-duplex mode, or both. It is noted that a transceiver may be implemented without any requirement of integration on a single die, and the present invention is not limited to any particular partitioning of transceiver functionality amongst any particular number of components. In typical embodiments, transceivers are formed on a single die.

As used herein, the term "transponder" refers to circuitry including a transmitter and a receiver such that a transponder may be used to transmit information responsive to receiving a query or other form of interrogation signal or communication. It is noted that a transponder may be implemented without any requirement of integration on a single die, and the present invention is not limited to any particular partitioning of transponder functionality amongst any particular number of components. In typical embodiments, transponders are formed on a single die.

The terms, chip, die, integrated circuit, semiconductor device, and microelectronic device, are often used interchangeably in the field of electronics. The present invention is applicable to all the above as these terms are generally understood in the field.

With respect to chips, it is common that power, ground, and various signals may be coupled between them and other circuit elements via physical, electrically conductive connections. Such a point of connection may be referred to as an input, output, input/output (I/O), terminal, line, pin, pad, port, interface, or similar variants and combinations. Although connections between and amongst chips are commonly made by way of electrical conductors, those skilled in the art will appreciate that chips and other circuit elements may alternatively be coupled by way of optical, mechanical, magnetic, electrostatic, and electromagnetic interfaces.

The term "smartcard" refers to a physical substrate, such as a credit card sized piece of plastic, having an integrated circuit embedded therein. Typically, smartcards are used for financial transactions or secure access to locked facilities. An active smartcard is one that includes an embedded power supply such as a battery. A passive smartcard is one that requires power to be supplied from an external source. In some instances, the external source is an energization field from which the passive smartcard harvests the energy needed to carry out its desired function.

### AN ILLUSTRATIVE NEAR FIELD COMMUNICATIONS ENVIRONMENT

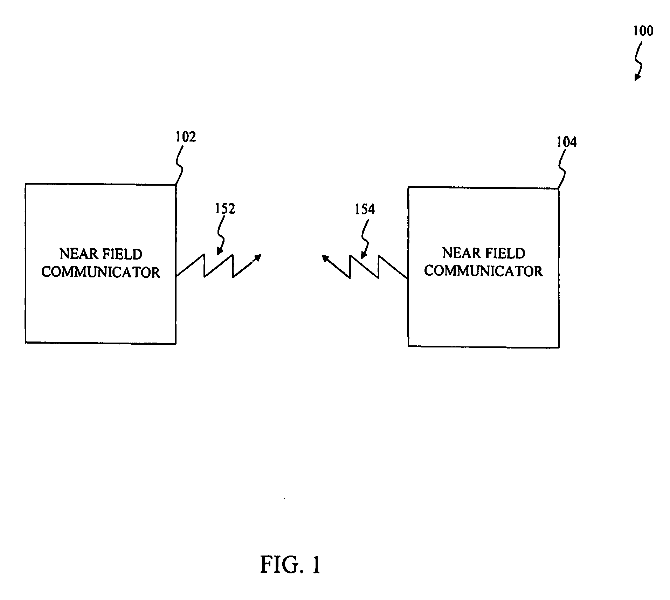

Fig. 1 is a block diagram showing an NFC environment in accordance with the present invention. An NFC environment **100** provides wireless communication of information among a first NFC device **102** and a second NFC device **104** that are sufficiently proximate to each other. The information may include one or more commands to be executed by first NFC device **102** and/or second NFC device **104,** data from one or more data storage devices that is to be transferred to first NFC device **102** and/or second NFC device **104,** or any combination thereof. The data storage devices may include one or more contactless transponders, one or more contactless tags, one or more contactless smartcards, any other machine-readable media that will be apparent to those skilled in the relevant art(s) without departing from the scope of the present claims, or any combination thereof. Other machine-readable media may include non-transitory storage media, such as but not limited to, volatile memory, e.g., random access memory (RAM); non-volatile memory, e.g., read only memory (ROM), flash memory, magnetic disk storage media, and optical storage media. Still other machine readable media may include electrical, optical, acoustical or other forms of propagated signals such as carrier waves, infrared signals, and digital signals to provide some examples.

It is noted that computer users often have a number of social networking profiles and logging onto each can be time consuming.

Various embodiments of the present invention provide methods and apparatus for NFC-enabled devices to store information regarding which social networking accounts a user has, and to interact with a computer terminal such that when the NFC-enabled device approaches the computer terminal, that computer terminal starts up with the sites that the user most likely prefers to view. The information stored in the NFC-enabled device may include web ID, password and favorite sites encrypted using a secure element feature of NFC-enabled devices. NFC-enabled devices in accordance with the present invention can be used to pair with a public computer in order to access social networking, or other web-based applications, from a public access point such as a cyber cafe. This approach provides a simple method for accessing a user's on-line content. Many different websites, each with different credentials may be conveniently accessed in this manner.

### OVERVIEW OF AN NFC DEVICE FOR PORTABLE PERSONALIZATION

As mentioned above, improvements in manufacturing technologies and digital architecture have resulted in a number of products and product categories that were not previously possible or practical to implement. The emerging developments in the area of Near Field Communication (NFC) circuits, systems and applications is making new products and product categories possible. Products incorporating NFC communication capabilities are sometimes referred to in this field as NFC-enabled. For example, mobile phones, smart cards or other electronic products that include NFC communication capabilities are referred to as NFC-enabled. NFC communication allows data to be communicated from a first device to a second device over short distances. Although a strict definition for the range of short distances is not agreed upon in the field, short range for NFC usually is thought of as being less than 4 cm, or within one wavelength of the selected communication frequency.

Various NFC arrangements include a pair of devices in which a first device acts as a "tag" and a second separate device within near-field range of the first device acts as a "reader". In various embodiments of the present invention the first device may be equipped with the circuitry for acting as both a tag and a reader.

As will be described in greater detail below, NFC-enabled devices and applications have utility in at least consumer electronics and industrial products.

In connection with the following illustrative embodiments, it is noted that any reference to a computational platform is intended to include similar computational devices and computers regardless of their form factor or input/output configuration. By way of example, and not limitation, a smartphone is a computational platform.

In one illustrative process in accordance with the present invention, an NFC-enabled device stores information specifying one or more social networking accounts of a user, and the user's credentials for accessing those social networking accounts. In this embodiment, if the NFC-enabled device is brought within the near-field coupling range of a computer, which is equipped with corresponding NFC capability, then information stored within the NFC-enabled device is near-field communicated to that computer. That is, the communication takes place by way of near-field coupling. Responsive to the information received from the NFC-enabled device the computer may start a web browser, communicate with the web server of the desired web site, and provide the user's credentials to the web server in order to access at least one of the user's social networking accounts. In some embodiments, if the computer is in a power saving state (e.g., "sleep", "hibernate") then the computer, responsive to receipt of information from the NFC-enabled device transitions to an active power state (i.e., "wakes up"), and then follows the steps described above for accessing one or more of a user's social networking sites. One advantage of such processes is that a user does not need to remember user account credentials or similar information required for accessing a social networking site. Another advantage is that when attempting to access various social networking sites, the user's account credentials are communicated to the computer via near-field coupling (i.e., without typing the information on a keyboard) and thereby avoiding exposure of that sensitive information to a malicious keystroke capture program.

In an alternative embodiment, prior to providing a user's account credentials or other access control information to the computer, the NFC-enabled device directs the computer to take one or more actions including, but not limited to, resetting, restarting, and executing a virus and/or malware scan. In this way the security risk of providing sensitive information to the computer may be reduced. In some embodiments, the detection of malicious software, such as a virus or malware, is reported to the NFC-enabled device. Responsive thereto the NFC-enabled device may prevent further communication with the computational platform. In some embodiments, the NFC-enabled device must receive an authenticated input from an authorized user before it re-enables the NFC functionality.

In a further alternative embodiment, the NFC-enabled device directs the computer to perform a website authentication process prior to near-field communicating the user's credentials or other access control information from the NFC-enabled device to the computer. If the website cannot be authenticated (e.g., invalid certificate), then the NFC-enabled device does not provide the credentials or other access control information.

In another embodiment of the present invention, the NFC-enabled device operates to provide additional information to the computer such that interactions with a website may begin from a predetermined state. In such embodiments, a cookie exchange takes place. In one aspect of the cookie exchange, the NFC-enabled device provides cookies to the computer where these cookies were stored in the NFC-enabled device as a consequence of one or more previous web browsing sessions. In some embodiments, the cookies may be transferred to the computer's file storage system prior to the web browser contacting the desired web site. In other embodiments, the web browser calls one or more operating system services to access the cookies from the NFC-enabled device, and the cookies are not stored in the computer's file storage system. Alternatively, one or more plug-ins for the web browser may be used to handle retrieving cookies from the NFC-enabled device. By avoiding storage of these cookies in the computer's file storage system there is less chance that a user's private information will used by an unauthorized entity.

Still referring to the cookie exchange, in some embodiments, updated cookie information is near-field communicated from the computer to the NFC-enabled device, and then stored in the memory of the NFC-enabled device. In some embodiments the updated cookie information is transferred from the computer's file storage system to the computer's near-field communication facility, and from there to the NFC-enabled device where it is stored in memory. It is noted that cookies received from the computer may replace one or more of the previously stored cookies, or may be stored in different memory locations.

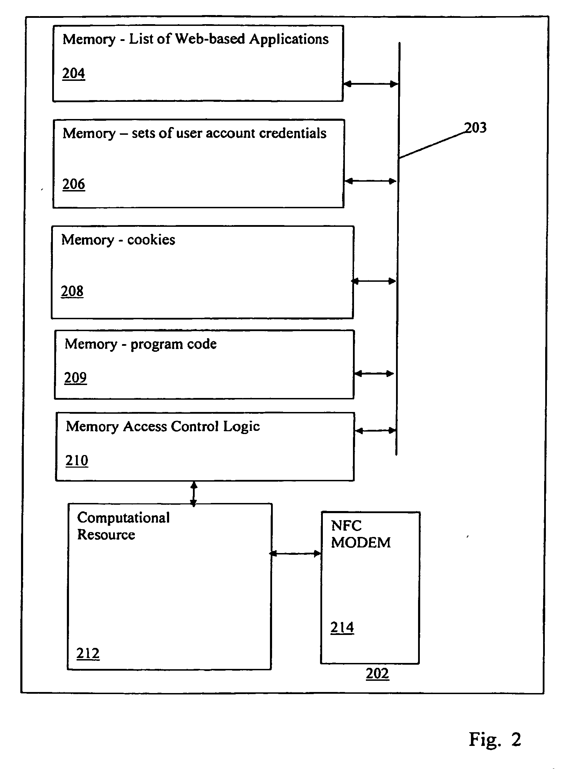

Fig. 2 is a block diagram of an illustrative NFC-enabled device **202** in accordance with the present invention. A memory block **204** is disposed within NFC-enabled device **202** and stored therein is a list of one or more web-based applications. In some embodiments the list of web-based applications includes social networking applications. In other embodiments the list of web-based applications may further, or alternatively, include web-based applications such as online shopping and on-line banking. A memory block **206** is disposed within NFC-enabled device **202** and stored therein are one or more sets of user account credentials, or similar access control information. Each set of credentials is associated with a corresponding web-based application from the list of web-based applications. A memory block **208** is disposed within NFC-enabled device **202** and stored therein are one or more sets of cookies. Each set of cookies is associated with one of the at least one web-based applications from the list of web-based applications. A memory block **209** is disposed within NFC-enabled device **202** and stored therein is program code that may be executed by a computational resource **212.** A memory access control logic block **210** is disposed within NFC-enabled device **202.** Memory access control logic block **210** provides the various internal control signals needed to read from, and in typical embodiments, write to memory blocks **204, 206** and **208.** A memory bus **203** is coupled to memory blocks **204, 206** and **208,** and to memory access control logic block **210.** Memory bus **203** provides a pathway for data to be read from and/or written to memory blocks **204, 206** and **208.**

Memory blocks **204, 206** and **208** may be implemented with any suitable type of memory circuitry. Those skilled in the art will recognize that memory blocks **204, 206** and **208** may be implemented as addressable regions within a single memory chip, or addressable regions of several different memory chips. In typical embodiments, memory blocks **204, 206** and, **208** are non-volatile memories. Non-volatile memories have the characteristic of retaining the contents stored therein even when no power is applied to those memories. There are a number of types of non-volatile memory including, but not limited to, flash memory, Read Only Memory (ROM), one-time programmable memory, fuse programmable memory, anti-fuse programmable memory, laser programmable memory, electrically alterable read only memory, and so on. In typical embodiments, at least a portion of the memory in the NFC-enabled device is a non-volatile memory that can be written to as well as read from.

Still referring to Fig. 2, the computational resource **212** is coupled to both memory access control logic block **210** and to an NFC Modem **214.** Computational resource **212** may be implemented as a software controlled embedded microcontroller, or CPU core. Program code for execution by computational resource **212** is stored in memory **209.** Typically the program code of memory **209** directs the operation of NFC-enabled device **202** with respect to communicating with an NFC reader device.

In an alternative arrangement, computational resource 212 is implemented without software control as a hardware only state machine. Those skilled in the art will, without undue experimentation, recognize the tradeoffs involved in selecting the appropriate implementation of a computational resource for any particular NFC-enabled device **202,** and based on the well-known tradeoffs of size, speed, power consumption, cost, design and debug time, total time to market, and computational throughput, be able to determine the implementation that suits their needs.

In this illustrative embodiment, NFC Modem **214** includes transmitter and receiver circuitry. It will be appreciated that in various embodiments of the present invention, NFC Modem **214** may further include circuitry for one or more control functions, such as but not limited to NFC communication protocols and hand-shaking sequences.

NFC-enabled device **202** may be, but is not limited to, products such as a smart card, a mobile phone, a smart phone, an electronic key fob, a keyless security access card, a tablet computer, and so on. NFC-enabled devices are not limited to any particular form factor or input/output configuration.

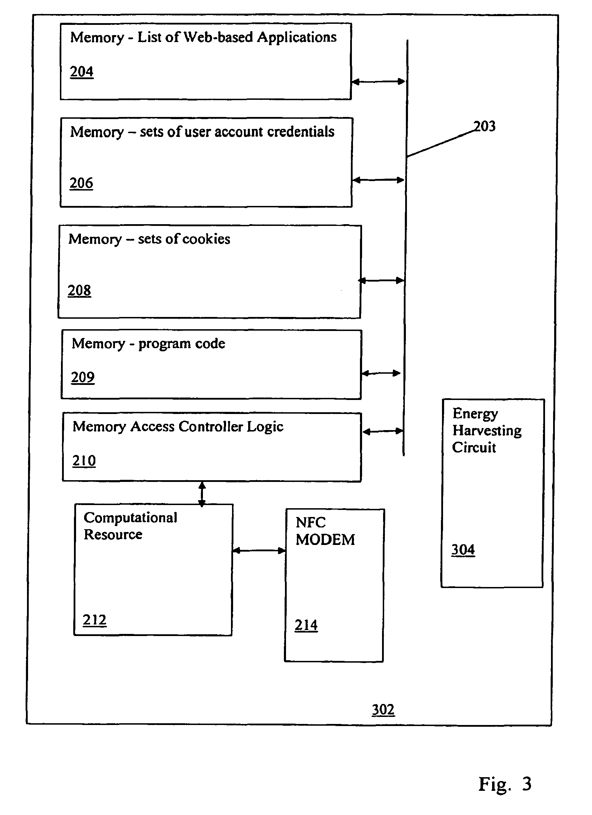

Fig. 3 is a block diagram of another illustrative NFC-enabled device **302** which is similar to the embodiment shown in Fig. 2. NFC-enabled device **302** of Fig. 3 is similar to NFC-enabled device **202,** except that an energy harvesting circuit **304** has been added. Various energy harvesting circuits are known in the art, and are commonly used in connection with NFC devices. Embodiments of the present invention may be configured with one or more energy harvesting circuits. In further alternative embodiments, various ones of a plurality of energy harvesting circuits may be constructed with different circuits, different circuit technologies, different power output characteristics, and/or different energizing sources. Energizing sources may include, but are not limited to, electromagnetic fields, magnetic fields, and thermal gradients (for use with thermoelectric power generation materials).

Still referring to Fig. 3, it is noted that energy harvesting circuit **304** is coupled to blocks **204, 206, 208, 209, 210, 212** and **214** of NFC-enabled device **202** by pathways (not shown) formed from electrically conductive material.

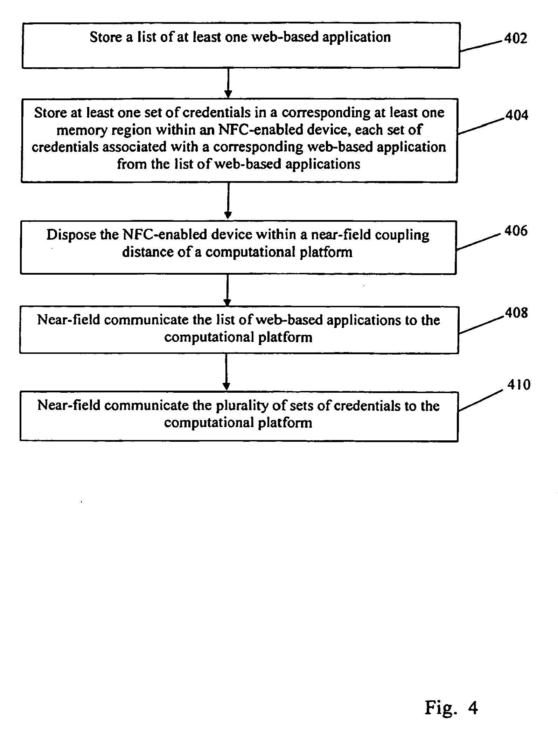

Referring to Fig. 4, one illustrative method of providing, over a near-field communications link, portable application-specific personal information to a web-based application, includes storing **402** a list of at least one web-based application; storing **404** at least one set of credentials in a corresponding at least one memory region within an NFC-enabled device, each set of credentials associated with a corresponding web-based application from the list of web-based applications; disposing **406** the NFC-enabled device within a near-field operational range of a computational platform; near-field communicating **408** the list of web-based applications to the computational platform; and near-field communicating **410** the plurality of sets of credentials to the computational platform.

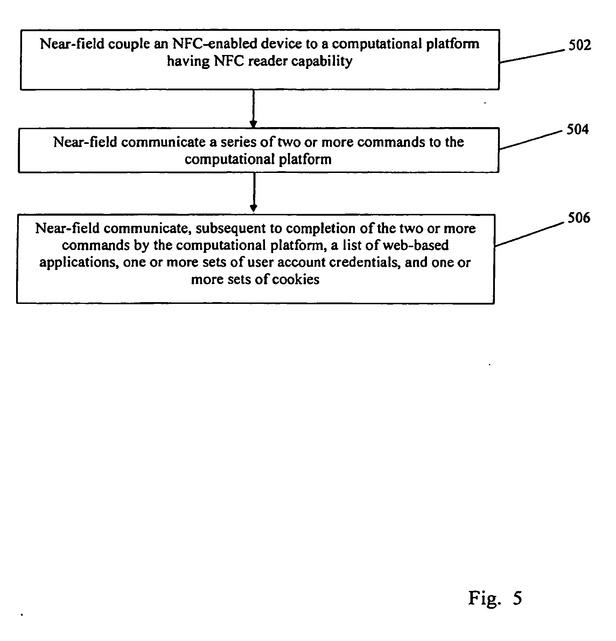

Referring to Fig. 5, an illustrative method, in accordance with the present invention, of securely providing sensitive information, over a near-field communications link, to one or more web-based applications, includes near-field coupling **502** an NFC-enabled device to a computational platform having NFC reader capability; near-field communicating **504** a series of two or more commands to the computational platform; and near-field communicating 506, subsequent to completion of the two or more commands by the computational platform, a list of web-based applications, one or more sets of user account credentials, and one or more sets of cookies.

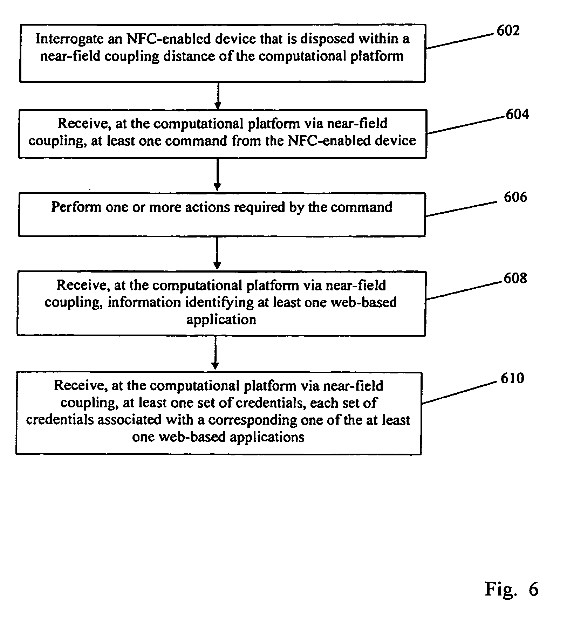

Referring to Fig. 6, an illustrative method of operating an NFC-enabled computational platform, includes interrogating **602** an NFC-enabled device that is disposed within a near-field coupling distance of the computational platform; receiving **604,** at the computational platform via near-field coupling, at least one command from the NFC-enabled device; performing **606** one or more actions required by the command; receiving **608,** at the computational platform via near-field coupling, information identifying at least one web-based application; and receiving **610,** at the computational platform via near-field coupling, at least one set of credentials, each set of credentials associated with a corresponding one of the at least one web-based applications.

It is noted that in various alternative embodiments, methods of operating an NFC-enabled computational platform may further include validating that the user of the NFC-enabled device (i.e., the source of the credentials and other secure information) is in fact authorized to present the secure information to the NFC-enabled computational platform. For example, the computational platform may require the entry of a pass code or fingerprint, or perform a photo recognition operation to validate the user's identity and/or authority to present the secure information contained in the NFC-enabled device to the computational platform. Further embodiments of the present invention may include the performance of anti-spoofing processes to lend greater reliability to this authentication process. In typical embodiments the anti-spoofing processes are performed by the computational platform.

A further alternative embodiment involves: (a) an NFC-enabled smartphone with a secure element containing an authentication/encryption application which holds a website login and password information; (b) an "untrusted" computer, such as may be found in a cyber café; the untrusted computer having an NFC reader and having a connection to the Internet; (c) one or more websites including but not limited to social networking websites and shopping websites; and (d) a third party proxy website. In this embodiment, a user presents an NFC-enabled smartphone to a cyber café computer; the NFC-enabled smartphone sends a request to open a web link to a third party proxy site; the NFC-enabled smartphone sends a request to the third party website for encrypted authentication and receives it; and the third party website sends a request to the NFC-enabled smartphone for encrypted authentication and receives it, resulting in the NFC-enabled smartphone and the third part website trusting each other. The NFC-enabled smartphone and third party proxy website then set up an encrypted link, which in some embodiments can be accomplished by using shared keys that have just been authenticated in request/reply sequence for encrypted authentication between the NFC-enabled smartphone and the third party website. In other embodiments, setting up the encrypted link may include using RSA public and private keys. At this point, the NFC smartphone sends encrypted logins and keys for desired websites to the third party proxy website and then requests the third party trusted website to act as a proxy to open and login to the aforementioned social/shopping network sites. In this way, the desired sites can be logged into without the untrusted computer ever seeing plain text login or password data. In such embodiments the third party website, which could be paid for by a subscription or advertising, is provided by a trusted source. It is noted that the original account set up is done on a trusted private computer.

In alternative embodiments, an NFC-enabled device may near-field communicate with a computational platform in order to provide that platform with a user's profile information. By way of example, and not limitation, the NFC-enabled device may provide information to the computational platform wherein that information is directed to the user's preferences for background screen colors, display screen resolution, accessibility features, audio settings, default application program settings, power savings features, and so on. It will be appreciated that, in various embodiments of the present invention, information that is near-field communicated from the NFC-enabled device to the computational platform may be directed to, and/or used by, the operating system and application software. In still further embodiments, the information that is near-field communicated from the NFC-enabled device to the computational platform may be directed to one or more control registers, or one or more memory locations of the computational platform.

It will be appreciated that NFC-enabled devices in accordance with the present invention may be active or passive. Active devices have access to a power supply such as a battery or other DC power supply. Passive devices are those which need to harvest energy from an external field.

### CONCLUSION

It is to be appreciated that the Detailed Description section, and not the Abstract of the Disclosure, is intended to be used to interpret the claims. The Abstract of the Disclosure may set forth one or more, but not all, exemplary embodiments of the invention, and thus, is not intended to limit the invention and the subjoined claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the scope of the present claims. Thus the invention should not be limited by any of the above-described exemplary embodiments, but should be defined only in accordance with the subjoined claims and their equivalents.

## Claims

1. A method of providing, over a near-field communications link, portable application-specific personal information to a web-based application, comprising:
storing a list of at least one web-based application;
storing at least one set of credentials in a corresponding at least one memory region (206) within an NFC-enabled device (102, 104, 202, 302), each set of credentials associated with a corresponding web-based application from the list of web-based applications;
disposing the NFC-enabled device within a near-field operational range of a computational platform;
near-field communicating a command to the computational platform; and
based upon results of performing the command by the computational platform:
near-field communicating the list of web-based applications to the computational platform, and
near-field communicating the plurality of sets of credentials to the computational platform.

2. The method of claim 1, wherein the command is selected from the group consisting of reset the computational platform, restart the computational platform, perform a virus scan, and perform a malware scan.

3. The method of claim 1, further comprising:
storing one or more sets of cookies, each set of cookies associated with a corresponding web-based application from the list of web-based applications.

4. The method of claim 3, further comprising:
near-field communicating the one or more sets of cookies from the NFC-enabled device to the computational platform.

5. The method of claim 1, further comprising:
receiving, at the NFC-enabled device via near-field coupling, one or more sets of cookies; and
storing the one or more sets of cookies in a memory of the NFC-enabled device.

6. The method of claim 1, wherein at least one web-based application is a social networking application.

7. The method of claim 1, wherein at least one web-based application is selected from the group consisting of on-line shopping and on-line banking.

8. A method of operating an NFC-enabled computational platform, comprising:
interrogating an NFC-enabled device (102, 104, 202, 302) that is disposed within a near-field coupling distance of the computational platform;
receiving, at the computational platform via near-field coupling, at least one command from the NFC-enabled device;
performing one or more actions required by the command; and
based upon results of the performing the one or more actions required by the command:
receiving, at the computational platform via near-field coupling, information identifying at least one web-based application, and
receiving, at the computational platform via near-field coupling, at least one set of credentials, each set of credentials associated with a corresponding one of the at least one web-based applications.

9. An NFC-enabled device, comprising:
a first memory (204), the first memory having stored therein a list of web-based applications;
a second memory (206), the second memory having stored therein at least one set of user account credentials;
a third memory (208), the third memory having stored therein at least one set of cookies;
a fourth memory (2099, the fourth memory having stored therein program code;
a memory access controller (210) coupled to the first memory, the second memory, the third memory, and the fourth memory;
a computational resource (212) coupled to the memory access controller; and
an NFC modem (214) coupled to the computational resource,
wherein the NFC-enabled device is configured to:
near-field communicate a command to a computational platform; and
based upon results of performing the command by the computational platform:
near-field communicate the list of web-based applications to the computational platform, and
near-field communicate the at least one set of user account credentials to the computational platform.

10. The NFC communication device of claim 9, further comprising:
an energy harvesting circuit (304) coupled to the NFC modem.

11. The NFC communication device of claim 9, wherein the list of web-based applications includes social networking applications.

12. The NFC communication device of claim 9, wherein the NFC-enabled device is a smart phone.

13. The NFC communication device of claim 9, wherein the first, second, third and fourth memories are coupled to the memory controller by a bus (203); the first, second, third and fourth memories are non-volatile memories; and at least the first, second and third memories are writable.

## Patentansprüche

1. Verfahren zum Bereitstellen persönlicher Informationen, die für eine tragbare Anwendung spezifisch sind, über einen Nahfeldkommunikationslink an eine webbasierte Anwendung, wobei das Verfahren umfasst:
Speichern einer Liste wenigstens einer webbasierten Anwendung;
Speichern wenigstens eines Satzes von Berechtigungsnachweisen in einem korrespondierenden wenigstens einen Speicherbereich (206) in einer NFC-aktivierten Vorrichtung (102, 104, 202, 302), wobei jeder Satz von Berechtigungsnachweisen zu einer korrespondierenden webbasierten Anwendung aus der Liste webbasierter Anwendungen gehört;
Anordnen der NFC-aktivierten Vorrichtung in einem Nahfeld-Betriebsbereich einer Rechnerplattform;
Nahfeldkommunizieren eines Befehls an die Rechnerplattform; und
basierend auf Ergebnissen des Ausführens des Befehls durch die Rechnerplattform:
Nahfeldkommunizieren der Liste webbasierter Anwendungen an die Rechnerplattform; und
Nahfeldkommunizieren der Vielzahl von Sätzen von Berechtigungsnachweisen an die Rechnerplattform.

2. Verfahren nach Anspruch 1, wobei der Befehl ausgewählt wird aus der Gruppe bestehend aus Zurücksetzen der Rechnerplattform, Neustarten der Rechnerplattform, Durchführen von Virenüberprüfung und Durchführen von Schadprogrammüberprüfung.

3. Verfahren nach Anspruch 1, das des Weiteren umfasst:
Speichern eines oder mehrerer Sätze von Cookies, wobei jeder Satz von Cookies zu einer korrespondierenden webbasierten Anwendung aus der Liste webbasierter Anwendungen gehört.

4. Verfahren nach Anspruch 3, das des Weiteren umfasst:
Nahfeldkommunizieren des einen oder der mehreren Sätze von Cookies von der NFC-aktivierten Vorrichtung an die Rechnerplattform.

5. Verfahren nach Anspruch 1, das des Weiteren umfasst:
Empfangen eines oder mehrerer Sätze von Cookies an der NFC-aktivierten Vorrichtung über Nahfeldkopplung; und
Speichern des einen oder der mehreren Sätze von Cookies in einem Speicher der NFC-aktivierten Vorrichtung.

6. Verfahren nach Anspruch 1, wobei die wenigstens eine webbasierte Anwendung eine soziale Netzwerkanwendung ist.

7. Verfahren nach Anspruch 1, wobei die wenigstens eine webbasierte Anwendung ausgewählt wird aus der Gruppe bestehend aus Online-Shopping und Online-Banking.

8. Verfahren zum Betreiben einer NFC-aktivierten Rechnerplattform, das umfasst:
Abfragen einer NFC-aktivierten Vorrichtung (102, 104, 202, 302), die sich in Nahfeldkopplungsdistanz von der Rechnerplattform befi ndet;
Empfangen wenigstens eines Befehls von der NFC-aktivierten Vorrichtung an der Rechnerplattform über Nahfeldkopplung;
Durchführen einer oder mehrerer Aktionen, die durch den Befehl erforderlich sind; und
basierend auf den Ergebnissen des Durchführens der einen oder der mehreren Aktionen, die durch den Befehl erforderlich sind:
Empfangen von Informationen, die wenigstens eine webbasierte Anwendung identifizieren, an der Rechnerplattform über Nahfeldkopplung; und
Empfangen wenigstens eines Satzes von Berechtigungsnachweisen an der Rechnerplattform über Nahfeldkopplung, wobei jeder Satz von Berechtigungsnachweisen zu einer korrespondierenden der wenigstens einen webbasierten Anwendungen gehört.

9. NFC-aktivierte Vorrichtung mit:
einem ersten Speicher (204), wobei in dem ersten Speicher eine Liste webbasierter Anwendungen gespeichert ist;
einem zweiten Speicher (206), wobei in dem zweiten Speicher wenigstens ein Satz von Benuzterkonto-Berechtigungsnachweisen gespeichert ist;
einem dritten Speicher (208), wobei in dem dritten Speicher wenigstes ein Satz von Cookies gespeichert ist;
einem vierten Speicher (209), wobei in dem vierten Speicher Programmcode gespeichert ist;
einem Speicher-Zugriffscontroller (210), der mit dem ersten Speicher, dem zweiten Speicher, dem dritten Speicher und dem vierten Speicher verbunden ist;
einer Rechnerressource (212), die mit dem Speicher-Zugriffscontroller verbunden ist; und
einem NFC-Modem (214), das mit der Rechnerressource verbunden ist;
wobei die NFC-aktivierte Vorrichtung konfiguriert ist zum:
Nahfeldkommunizieren eines Befehls an eine Rechnerplattform; und
basierend auf Ergebnissen des Ausführens des Befehls durch die Rechnerplattform:
Nahfeldkommunizieren der Liste webbasierter Anwendungen an die Rechnerplattform; und
Nahfeldkommunizieren des wenigstens einen Satzes von Benutzerkonto-Berechtigungsnachweisen an die Rechnerplattform.

10. NFC-Kommunikationsvorrichtung nach Anspruch 9, die des Weiteren aufweist:
eine Energieernteschaltung (304), die mit dem NFC-Modem verbunden ist.

11. NFC-Kommunikationsvorrichtung nach Anspruch 9, wobei die Liste webbasierter Anwendungen soziale Netzwerkanwendungen aufweist.

12. NFC-Kommunikationsvorrichtung nach Anspruch 9, wobei die NFC-aktivierte Vorrichtung ein Smartphone ist.

13. NFC-Kommunikationsvorrichtung nach Anspruch 9, wobei der erste, der zweite, der dritte und der vierte Speicher über einen Bus (203) mit dem Speichercontroller verbunden sind; wobei der erste, der zweite, der dritte und der vierte Speicher nichtflüchtige Speicher sind; und wobei wenigstens der erste, der zweite und der dritte Speicher beschreibbar sind.

## Revendications

1. Procédé de fourniture, sur une liaison de communication en champ proche, d'une information personnelle spécifique à une application portable à une application Web, comprenant :
le stockage d'une liste d'au moins une application Web;
le stockage d'au moins un ensemble de justificatifs d'identité dans au moins une région de mémoire (206) correspondante au sein d'un dispositif (102, 104, 202, 302) compatible NFC, chaque ensemble de justificatifs d'identité associé avec une application Web correspondante parmi la liste d'applications Web ;
le positionnement du dispositif compatible NFC à l'intérieur d'une portée opérationnelle en champ proche d'une plate-forme de calcul ;
la communication en champ proche d'une commande à la plate-forme de calcul ; et
sur la base de résultats de l'exécution de la commande par la plate-forme de calcul :
la communication en champ proche de la liste d'applications Web à la plate-forme de calcul, et
la communication en champ proche de la pluralité d'ensembles de justificatifs d'identité à la plate-forme de calcul.

2. Procédé selon la revendication 1, dans lequel la commande est choisie parmi le groupe consistant en une réinitialisation de plate-forme de calcul, un redémarrage de la plate-forme de calcul, l'exécution d'une recherche de virus, et l'exécution d'une recherche de logiciels malveillants.

3. Procédé selon la revendication 1, comprenant en outre :
le stockage d'un ou plusieurs ensemble(s) de mouchards, chaque ensemble de mouchards associé avec une application Web correspondante parmi la liste d'applications Web.

4. Procédé selon la revendication 3, comprenant en outre :
la communication en champ proche du ou des ensemble(s) de mouchards du dispositif compatible NFC à la plate-forme de calcul.

5. Procédé selon la revendication 1, comprenant en outre :
la réception, au niveau du dispositif compatible NFC par l'intermédiaire d'un couplage en champ proche, d'un ou plusieurs ensemble(s) de mouchards ; et
le stockage du ou des ensemble(s) de mouchards dans une mémoire du dispositif compatible NFC.

6. Procédé selon la revendication 1, dans lequel au moins une application Web est une application de réseautage social.

7. Procédé selon la revendication 1, dans lequel au moins une application Web est choisie parmi le groupe consistant en des achats en ligne et des services bancaires en ligne.

8. Procédé d'exploitation d'une plate-forme de calcul compatible NFC, comprenant :
l'interrogation d'un dispositif (102, 104, 202, 302) compatible NFC qui est positionné à l'intérieur d'une distance de couplage en champ proche de la plate-forme de calcul ;
la réception, au niveau de la plate-forme de calcul par l'intermédiaire d'un couplage en champ proche, d'au moins une commande provenant du dispositif compatible NFC ;
l'exécution d'une ou plusieurs action(s) requise(s) par la commande ; et
sur la base de résultats de l'exécution de la ou des action(s) requise(s) par la commande :
la réception, au niveau de la plate-forme de calcul par l'intermédiaire d'un couplage en champ proche, d'une information identifiant au moins une application Web, et
la réception, au niveau de la plate-forme de calcul par l'intermédiaire d'un couplage en champ proche, d'au moins un ensemble de justificatifs d'identité, chaque ensemble de justificatifs d'identité associé avec une correspondante parmi l'au moins une application Web.

9. Dispositif compatible NFC, comprenant :
une première mémoire (204), la première mémoire ayant, stockée dans celle-ci, une liste d'applications Web ;
une deuxième mémoire (206), la deuxième mémoire ayant, stockée dans celle-ci, au moins un ensemble de justificatifs d'identité de compte d'utilisateur ;
une troisième mémoire (208), la troisième mémoire ayant, stockée dans celle-ci, au moins un ensemble de mouchards ;
une quatrième mémoire (209), la quatrième mémoire ayant, stockée dans celle-ci, un code de programme ;
un contrôleur (210) d'accès à la mémoire couplé à la première mémoire, la deuxième mémoire, la troisième mémoire, et la quatrième mémoire ;
une ressource de calcul (212) couplée au contrôleur d'accès à la mémoire ; et
un modem (214) NFC couplé à la ressource de calcul,
dans lequel le dispositif compatible NFC est configuré pour :
communiquer en champ proche une commande à une plate-forme de calcul ; et
sur la base de résultats de l'exécution de la commande par la plate-forme de calcul :
communiquer en champ proche la liste d'applications Web à la plate-forme de calcul, et
communiquer en champ proche l'au moins un ensemble de justificatifs d'identité de compte d'utilisateur à la plate-forme de calcul.

10. Dispositif de communication NFC selon la revendication 9, comprenant en outre :
un circuit (304) de recueil d'énergie couplé au modem NFC.

11. Dispositif de communication NFC selon la revendication 9, dans lequel la liste d'applications Web inclut des applications de réseautage social.

12. Dispositif de communication NFC selon la revendication 9, dans lequel le dispositif compatible NFC est un téléphone intelligent.

13. Dispositif de communication NFC selon la revendication 9, dans lequel les première, deuxième, troisième et quatrième mémoires sont couplées au contrôleur de mémoire par un bus (203) ; les première, deuxième, troisième et quatrième mémoires sont des mémoires non volatiles ; et au moins les première, deuxième et troisième mémoires sont inscriptibles.
